# EUROPEAN PATENT SPECIFICATION

(11) **EP 4 298 003 B1**
(45) Date of publication and mention of the grant of the patent: **14.10.2026**
(21) Application number: 22712837.8
(22) Date of filing: 25.02.2022
(51) Int. Cl.: B60W 60/00, G06N 20/00, B60W 50/00, B60W 30/095

(54) **PREDICTION AND PLANNING FOR MOBILE ROBOTS**
VORHERSAGE UND PLANUNG FÜR MOBILE ROBOTER
PRÉDICTION ET PLANIFICATION POUR ROBOTS MOBILES

(30) Priority: 26.02.2021 GB 202102789
(43) Date of publication of application: 03.01.2024
(73) Proprietor: Five AI Limited, Cambridge CB1 2JH (GB)
(72) Inventor: KNITTEL, Anthony, Edinburgh (GB)
(74) Representative: Page White Farrer
(86) International application number: PCT/EP2022/054858
(87) International publication number: WO 2022/180237

(56) References cited:
- EP-A1- 2 923 911
- CN-A- 112 347 567
- DE-A1- 102019 114 737
- US-A1- 2019 129 436
- US-B1- 9 248 834

## Description

### Technical field

The present disclosure pertains to planning and prediction for autonomous vehicles and other mobile robots.

### Background

An emerging technology is autonomous vehicles (AVs) that can navigate by themselves on urban roads. Such vehicles must not only perform complex manoeuvres among people and other vehicles, but they must often do so while guaranteeing stringent constraints on the probability of adverse events occurring, such as collisions with these agents in the environments. An autonomous vehicle, also known as a self-driving vehicle, refers to a vehicle which has a sensor system for monitoring its external environment and a control system that is capable of making and implementing driving decisions automatically using those sensors. This includes in particular the ability to automatically adapt the vehicle speed and direction of travel based on perception inputs from the sensor system. A fully-autonomous or "driverless" vehicle has sufficient decision-making capability to operate without any input from a human driver. However, the term "autonomous vehicle" as used herein also applies to semi-autonomous vehicles, which have more limited autonomous decision-making capability and therefore still require a degree of oversight from a human driver. Other mobile robots are being developed, for example for carrying freight supplies in internal and external industrial zones. Such mobile robots would have no people on-board and belong to a class of mobile robot termed UAV (unmanned autonomous vehicle). Autonomous air mobile robots (drones) are also being developed. Reference is made to US 2019/0129436 which relates to a system and method for real-world autonomous vehicle trajectory simulation. Trajectory prediction models are trained to perform a simulation or operation phase to generate a vicinal scenario for each simulated vehicle, the vicinal scenarios corresponding to different locations, traffic patterns of environmental conditions being simulated. The prediction models can predict vehicles future trajectories given their driving intentions and vicinal scenarios. The models may be deployed in a trajectory simulation system to generate vicinal scenarios for each of a plurality of simulated vehicles. The simulated trajectory information can be provide to a system component used to create a virtual world where a control system for an autonomous vehicle can be trained and improved.

A core problem facing such AVs or mobile robots is that of predicting the behaviour of other agents in an environment so that actions that might be taken by an autonomous vehicle (ego actions) can be evaluated. This allows ego actions to be planned in a way that takes into account predictions about other vehicles.

Publication WO 2020079066 entitled Autonomous Vehicle Planning and Prediction describes a form of prediction based on "inverse planning". Inverse planning refers to a class of prediction methods which assume an agent will plan its decisions in a predictable manner. Inverse planning can be performed over possible manoeuvres or behaviours in order to infer a current manoeuvre/behaviour of an agent based on relevant observations (a form of manoeuvre detection). Inverse planning can also be performed over possible goals, to infer a possible goal of an agent (a form of goal recognition).

Reference is made to CN 112347567A which relates to a method for predicting vehicle intention and trajectory. The aim is to help intelligent vehicles better understand a traffic environment. An intention based trajectory is predicted and a trajectory is predicted based on a vehicle dynamics model. The two trajectory prediction results are combined using a weighting function. Future behaviour is reasoned using indicators such as forward drivable space, collision safety factor and comfort factor.

### Summary

The inventors have recognised that the approach described in WO 2020079066 has limitations in the nature of the goals that it is possible to infer of an agent.

Aspects of the present invention address these limitations by providing a method for performing prediction of agent behaviours which encompass multiple types of agent behaviour, not only rational goal-directed behaviour as described in WO 2020079066. Aspects of the present invention enable a diverse range of agent behaviour to be modelled , including a range of behaviours which real drivers may follow in practice . Such behaviours extend beyond rational goal directed behaviours and may include driver error and irrational behaviours.

According to one aspect of the present invention there is provided a method implemented by an ego agent in a scenario of predicting actions of one or more actor agent in the scenario, the method comprising:
for each actor agent using a plurality of agent models to generate a set of candidate futures, each candidate future providing an expected action of the actor agent;
applying a weighting function to each candidate future to indicate its relevance in the scenario; and
selecting for each actor agent a group comprising a plurality of candidate futures based on the indicated relevance, wherein the plurality of agent models comprises a first model representing a rational goal directed behaviour inferable from the vehicular scene of the scenario, and at least one second model representing an alternate behaviour not inferable from the vehicular scene of the scenario.

In some embodiments, the step of generating each candidate future is carried out by a prediction component of the ego agent which provides each expected action at a prediction time step. The candidate futures may be transmitted to a planner of the ego agent. The prediction time step may be a predetermined time ahead of current time when the candidate futures are generated. The candidate futures may be generated in a given time window.

In other embodiments, the candidate futures are generated by a joint planner/prediction exploration method.

In some embodiments, the step of using the agent models to generate the candidate futures comprises supplying to each agent model a current state of all actor agents in the scenario.

In some embodiments, a history of one or more actor agents in the scenario may be supplied to each agent model, prior to generating the candidate futures.

Sensor derived data of the current scenario may be supplied to each agent model prior to generating the candidate futures. The data may be derived from a sensor system on board an AV constituting the ego agent.

The at least one second model may be selected from one or more of the following agent model types:
an agent model type which represents a rational goal directed behaviour based on inadequate or incorrect information about the scenario;
an agent model type which represents unexpected actions of an actor agent ; and
an agent model type which models known or observed driver errors.

In some embodiments , each candidate future is defined as one or more trajectory for the actor agent. In other embodiments , each candidate future is defined as a raster probability density function.

The step of selecting candidate futures may comprise using at least one of a probability score indicating the likelihood of events occurring and a significance factor indicating the significance to the ego agent of resulting outcomes .
using at least one of a probability score indicating the likelihood that the candidate future will be implemented by an actor agent and a significance factor indicating the significance to the ego agent of the candidate future.

In another aspect, the invention provides a computer device comprising one or more hardware processor and computer memory which stores computer executable instructions which, when executed by the one or more hardware processor implement the above defined method.

**In** another aspect the invention provides a computer program product comprising computer executable instructions stored on a computer memory, the computer executable instructions being executable by one or more hardware processor to implement the above defined method.

The computer device may be embodied in an on-board computer system of an autonomous vehicle, the autonomous vehicle comprising an on-board sensor system for capturing data comprising information about the environment of the scenario and the state of the actor agents in the environment.

The computer device may comprise a data processing component configured to implement at least one of localisation, object detecting and object tracking to provide a representation of the environment of the scenario.

In an unclaimed example, there is provided a method of training a computer implemented behaviour model for predicting actions of an actor vehicle agent in a vehicular scene, wherein the behaviour model is configured to recognise very low probability events occurring in the vehicular scene, the method comprising:
applying input training data to a computer implemented machine learning system, the training data being sourced from a data set collected in a context in which such very low probability events are the only source of collected data of the dataset, wherein the computer implemented machine learning system is configured as a classifier, whereby the trained model recognises such low probability events in the vehicular scene.

The invention further provides in another aspect a computer device comprising one or more hardware processor and computer memory which stores computer executable instructions which, when executed by the one or more hardware processor implement the preceding method.

The invention further provides in another aspect a computer program product comprising computer executable instructions stored on a computer memory, the computer executable instructions being executable by one or more hardware processor to implement the preceding method.

For a better understanding of the present invention and to show how the same may be carried into effect, reference will now be made by way of example to the accompanying drawings.

### Brief description of the drawings

Figure 1 is a schematic functional diagram of a computer system onboard an AV;
Figure 2 illustrates a change of lane interactive scenario.

### Description of the preferred embodiments

The present disclosure relates to a method and system of performing prediction of agent behaviours in an interactive scenario in which an ego agent is required to predict and plan its manoeuvres. The present disclosure involves interactive prediction based on multiple types of agent behaviour, including both rational goal directed behaviour and non-ideal behaviour such as mistakes, to produce estimates of future states in interactive scenarios. Interactive prediction involves predicting a number of expected future states, which each include a future position or trajectory of each of the agents in a scene, as well as estimates of the probability that each state may occur. These predictive future states involve consistent predictions of each of the agents present in the future state, for example by considering how the agents will react to the ego vehicle.

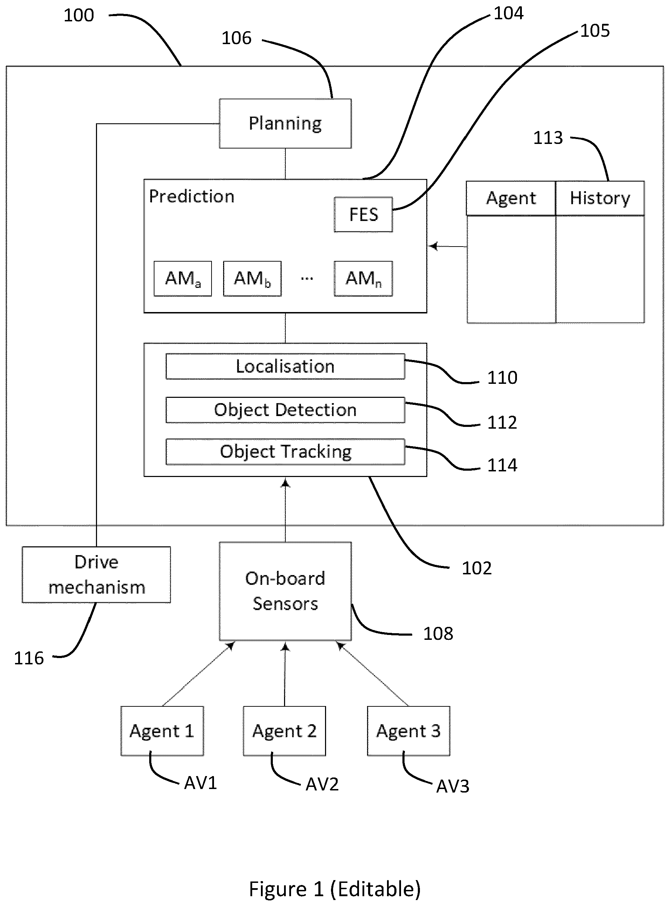

Reference will now be made to Figure 1 which shows a schematic functional block diagram of certain functional components embodied in an onboard computer system 100 of an autonomous vehicle (ego vehicle EV) as part of an AV runtime stack. These components comprise a data processing components 102, a prediction component 104 and a planning component (AV planner) 106. The computer system 100 comprises a computer device having one or more hardware processor and computer memory which stores computer executable instructions which, when executed by the one or more hardware processor implement the functions of the functional components . The computer executable instructions may be provided in a transitory or non transitory computer program product in the form of stored or transmissible instructions.

The data processing components 102 receives sensor data from an onboard sensor system 108 on the AV. The onboard sensor system 108 can take different forms but generally comprises a variety of sensors such as image capture devices (cameras), LIDAR units etc., satellite positioning sensors (GPS etc.), motion sensors (accelerometers, gyroscopes etc.) etc., which collectively provide rich sensor data from which it is possible to extract detailed information about the surrounding environment and the state of the AV and other actors (vehicles, pedestrians etc.) within that environment.

In Figure 1, three example actors are illustrated, labelled actor vehicle (AV) 1, AV2, AV3 respectively.

Note that the present techniques are not limited to using image data and the like capture using onboard optical sensors (image capture devices, LIDAR etc.) of the AV itself. The method can alternatively or additionally be applied using externally captured sensor data, for example CCTV images etc. captured by external image capture units in the vicinity of the AV. In that case, at least some of the sensor inputs may be received by the AV from external sensor data sources via one or more wireless communication links.

The data processing component 102 processes the sensor data in order to extract information therefrom. The set of functional components are responsible for recording generic information about the scene and the actors in the scene. These functional components comprise a localisation block 110, an object detection block 112 and an object tracking block 114.

Localisation is performed to provide awareness of the surrounding environment and the AVs location within it. A variety of localisation techniques may be used to dissent, including visual and map-based localisation. By way of example, reference is made to United Kingdom patent application No. 1812658.1 entitled "Vehicle Localisation" which is incorporated herein by reference in its entirety. This discloses a suitable localisation method that uses a combination of visual detection and predetermined map data. Segmentation is applied to visual (image) data to detect surrounding road structure, which in turn is matched to predetermined mapped data, such as high definition map, in order to determine accurate and robust estimates of the AVs location in a map frame of reference, in relation to road and/or other structure of the surrounding environment, which in turn is determined through a combination of visual detection and map-based inference by merging visual and map data. To determine the location estimate, an individual location estimate as determined from the structure matching is combined with other location estimates (such as GPS) using particle filtering or similar, to provide an accurate location estimate for the AV in the map frame of reference that is robust to fluctuations in the accuracy of the individual location estimates. Having accurately determined the AVs location on the map, the visually detected road structure is merged with the predetermined map data to provide a comprehensive representation of the vehicles current and historical surrounding environment in the form of a live map and an accurate and robust estimate of the AVs location in the map frame of reference. The term "map data" in the present context, includes map data of a live map as derived by merging visual (or other sensor-based) detection with predetermined map data, but also includes predetermined map data or map data derived from visual/sensor detection alone.

Object detection is applied to the sensor data to detect and localise the external actors within the environment such as vehicles, pedestrians and other external actors whose behaviour the AV needs to be able to respond to safely. This may for example comprise a form of 3D bounding box detection, wherein a location, orientation or size of objects within the environment and/or relative to the ego vehicle is estimated. This can, for example, be applied to 3D image data, such as RGBD (red green blue depth), LIDAR, point Cloud etc. This allows the location and other physical properties of such external actors to be determined on the map.

Object tracking is used to track any movement of detected objects within the environment. The result is an observed trace of each actor that is determined over time by way of the object tracking. The observed trace tour is a history of the moving object, which captures the path of the moving object over time, and may also capture other information such as the object's historic speed, acceleration etc. at different points in time.

An agent history component 113 is provided which holds a history of agents. Each agent has an identifier by which the ego vehicle has identified that actor in the scene, and is associated with its history in the agent history table 113.

The interactive prediction system in accordance with embodiments of the present invention comprises a set of agent models AMa, AMb , AMc ...each of which takes a current state of all agents, a history of agents and details of the current scenario's input and produces a predictive set of future actions for a given agent.

The localisation, object detection and object tracking implemented by the data processing component 102 provide a comprehensive representation of the ego vehicle surrounding environment, the current state of any external actors within that environment as well as the historical traces of such actors which the AV has been able to track. This is continuously updated in real-time to provide up-to-date location and environment awareness.

As mentioned, this information is provided to the agent models to produce a predicted set of future actions for a given agent.

The prediction component 104 uses this information as a basis for predictive analysis, in which it makes predictions about future behaviour of the external actors in the vicinity of the AV. The prediction component 104 comprises computer executable instructions which, when executed by the one or more hardware processor of the computer device in the computer system 100 implement a method for making such predictions. The computer executable instructions may be provided in a transitory or non transitory computer program product in the form of stored or transmissible instructions .

To make predictions, a prediction component uses a future exploration system FES 105 which uses the agent models to find possible futures for each agent in a given state, perform selective exploration of possible future states and actions from those states, and produces a set of predicted futures consisting of the future states of the agents in the scene.

From a current observed state of the world and the agents in it, if a prediction is needed for a given time window, such as five seconds ahead, producing a prediction involves selecting a reduced set of all of the possible futures, for example by selecting the set of futures considered the most probable, or those consistent with the particular model of agent behaviours. In some embodiments , futures may be selected that are significant for producing a good decision for the ego vehicle. For example, some futures may be lower probability but result in a crash, or even just an inconvenience for the ego or other drivers, and these would be considered as well.

In one embodiment , the AV planning component 106 ( sometimes referred to herein as the AV planner ) uses the extracted information about the ego's surrounding environment and the external agents within it, together with the behaviour predictions provided by the prediction component 104 as a basis for AV planning. That is to say, the predictive analysis by the prediction component 104 adds a layer of predicted information on top of the information that has been extracted from the sensor data by the data processing components, which in turn is used by the AV planning component 106 as a basis for AV planning decisions. Note that in other embodiments the planning and prediction may be carried out together in joint exploration of future paths. The planning component 106 comprises computer executable instructions which, when executed by the one or more hardware processor of the computer device of the computer system 100 implement a planning method . The computer executable instructions may be provided in a transitory or non transitory computer program product in the form of stored or transmissible instructions .

The system implements a hierarchical planning process in which the AV planning component 106 makes various high level decisions and increasingly lower level decisions that are needed to implement the higher level decisions. For example, as described further herein, the AV planner may infer certain goals attributed to certain actors, and then determine certain paths associated with those goals. Lower level decisions may be based on actions to be taken in view of those paths. The end result is a series of real-time low-level action decisions. In order to implement those decisions, the AV planning component 106 generates control signals, which are input, at least in part, to a drive mechanism 116 of the AV, in order to control the behaviour of the AV. For example, it may control steering, braking, accelerating, changing gear etc. Control signals may also be generated to execute secondary actions such as signalling.

The range of possible adverse behaviours can be very broad and can range from relatively common behaviours such as failing to observe another agent to very unusual actions such as an agent's steering or accelerating to the position of the ego vehicle. An expert system of adverse behaviours needs to include both a set of possible behaviours and an estimate of probability. Unusual events can either be encoded with low probability or excluded from the model, implying the probability is near 0. In this way, an expert system of adverse agent behaviours is a form of probabilistic model, requiring estimates to be produced from data and integrated with the planning system based on probabilistic predictions.

The encoding of the output of the probabilistic model is established based on the chosen representation of the system, and the requirements of the chosen planning system. One possible candidate encoding and interface may be to provide a set of futures for a given time window, each containing a trajectory of each agent in the scene, and associated probability estimates. This is a low bandwidth encoding which can be suitable when the prediction and planning system are fairly independent, and a small amount of data is used to produce the encoding exchange between the systems. A variation on this approach is to encode each future as a raster probability density map for each agent providing more information.

As mentioned above , one way of determining likely behaviours is joint future exploration . This is a tightly coupled method where the exploration of futures conducted by the prediction system operates in parallel with the planning system, such that the choice of futures to explore is informed by the significance of futures provided by the planner. The proposed ego trajectory may be developed in parallel with the exploration of futures conducted by the planner, and may evolve over time as prediction is taking place. The planner chooses which futures to explore, based on probability or significance ( and potentially other parameters), and for each state the prediction component 104 estimates a distribution of the actions that each agent in the scene may take. In the present disclosure the role of the prediction component is that given a state (and a history of previous states) it estimates the probability distribution of actions or manoeuvres for each agent in the scene.

As the plan is modified, information is derived about futures, i.e. certain joint futures states may remain relevant while others are less relevant so each change implies that additional future states will need to be explored and evaluated. An efficient representation for prediction may allow only the agents participating in interactions to require evaluation, while predictions of independent agents may be preserved. The predictive component 104 , in conjunction with the planner ,uses the agent models AMa, AMb,... in order to predict the behaviour of external actors in the driving area. The way that the reduced set of all of the possible futures is selected has implications for the planning component 106 and for proper planning in the AV stack. How this may be performed and the objectives of the component using the reduced set of futures are considerations to be evaluated in certain embodiments.

The agent models may be of different types. As discussed herein, the aim of the present system is to model a diverse range of behaviours which may not be rational behaviours . As defined herein , a rational model moves along optimal paths towards a rationally chosen goal. An AV may exhibit other behaviours that do not necessarily move along optimal paths, in other words these behaviours may have some amount of variability in the paths they take and the speeds they move at. In another category of behaviours is collision avoidance . An agent may take rational steps to avoid a collision in a context where it is fully informed of all aspects of its scene needed to make an optimal choice . However, an agent may exhibit imperfect behaviours. An agent may take rational steps to avoid a collision , but may not be fully informed , due to poor perception and the like. An agent may not act to avoid a collision at all - due to planning failures / perception failures or any other reason.

In some embodiments , these behaviours may be modelled from observed behaviours.

A first type of agent model is a so-called rational model. According to the rational model, it is assumed that all agents in the scene act rationally. That is, it is assumed that they will move towards specific goals along optimal paths. They will act to avoid collisions on a rational , informed basis . A prediction approach using a rational model type predicts trajectories based on a given planning model, and does not consider other actions such as irrational behaviours, or behaviours based on mistaken observations by the agents. As a result, this type of model produces a set of predicted futures that does not include unfavourable possibilities, even though those unfavourable possibilities may be extremely important to guide the actions of the ego vehicle. If an ego plan were to be produced using only such a model, it may be overly optimistic in assuming that other agents will make way for the ego vehicle. One example of such a rational type model is described in our earlier application PCT/EP2020/061232, and the contents of which are herein incorporated by reference in its entirety.

A second type of agent model may be to accommodate rational actions based on incorrect information, such as not observing the presence of another agent. For example, such a model may be useful where it is determined by the sensors that the environment is one of limited perception. This may be due to external environmental conditions such as poor weather, or sensor imperfections.

A third type of model may be unexpected or irrational actions, such as movements towards unknown goals or unexpected movements given the context. For example, an agent apparently following a straight path could make a turn towards a driveway or a U-turn in such a manner that it could not reasonably be inferred from the map or environment itself. One possible method for recognising such actions is described later .

Certain imperfect behaviours could be modelled as explained below by using a specialist dataset to produce models . For example , models of behaviours of collision avoidance with inadequate awareness of the scene , or not avoiding collisions at all could be extracted from accident records.

The future exploration system 105 performs selective exploration of futures offered by one or more of the models and chooses a set of informative futures that can be used as basis for planning and prediction. A tree of candidate futures is constructed, and its branches explored to determine which futures should be selected by the planning and prediction system . For example the system can use a Monte -Carlo tree search.

At each time step, each operating one of the models AMa, AMb....proposes a set of actions for each agent in the scene. These are used to construct a branching tree of possible futures.

The set of subsequent futures that follow from a given state depends on the representation used for each agent model. Each model produces a set of proposed (candidate) actions defined according to a particular representation. For example, there may be defined as a set of trajectories, or a raster probability density function depending on the nature of the system. In some embodiments, exploring possible futures may require a weighting function to indicate the relevance of each candidate branch. Some factors that can influence weighting include the expected probability that the future will occur, and its significance. In the embodiment using separate planning and prediction ,significance may be inferred by feedback from planning, for example the planner can indicate ego paths of interest and indicate weightings of significance of future states, which can inform the relevant futures to explore.

Under a joint exploration approach the planner chooses which future states to explore. Significance is related to the consequences of a state, and may be associated with risk (although other factors like inconvenience may be included). A state with low probability but high risk of collision can be considered significant.

Candidate futures that should be maintained are determined using a score. Scores may be based on any suitable criteria, for example using probability and significance factors mentioned above.

The planning component 106 may perform operations that balance the probability of events occurring and the significance of resulting outcomes. The score used for determining the interest value of each future for prediction may use similar measures, although in some circumstances, the prediction system may use scores based on significance feedback from the planner.

Significance measures may be provided in a number of different ways. One example of how a planner can produce a significance measure is based on whether introducing a candidate future alters the current chosen plan of the ego vehicle.

Another factor that may influence which candidate futures should be examined is based on which futures are relevant to the chosen path or paths of interest of the ego vehicle. Choosing an ego trajectory to constrain the possible futures may be considered as placing a condition on the possible futures. In other examples, interactive prediction may operate based on a number of possible ego paths, or operate iteratively with the planner instead of predicting futures based on a fixed ego path. Operating iteratively could take place for example by evaluating futures of a specific path, then re-evaluating additional futures after the path is modified.

As discussed, in some embodiments, a joint exploration of candidate ego trajectories and future predictions is used.

One issue that arises in an interactive prediction system is the need to include possible adverse events in predictions, to avoid leading to overly optimistic predictions that include assumptions about agents reacting favourably to ego actions and other agents in the scene . This problem can be eliminated or ameliorated by modelling adverse agent behaviours which includes adverse events such as mistakes or uncooperative behaviour by other agents.

One approach is to collect a large amount of data of driving experience, which includes examples of adverse events, and which can be used to produce a probabilistic model of these behaviours. However, adverse events are rare, so in order to effectively identify adverse events, a massive dataset would be needed. Even if a large dataset is used, it is difficult to generalise between instances, so if a rare event is observed in one scenario, it is not clear how likely the event should be considered as taking place in other scenarios. The way probability values are assigned to events occurring in different states, may depend on the properties of the probability model and therefore, it may not be well defined what a correct probability estimate may be. This can give rise to particular difficulties. For example, an event may be predicted occurring with 1E - 4 ( 10 to the power of -4) probability or 1E - 7 ( 10 to the power of -7) probability. Both these probability assessments may be reasonably assessed based on the available data. For example, the two models which generated these two estimates may have the same overall accuracy when tested on observed data, but may assign different probability estimates to predictions of rare events. As these estimates are used numerically in subsequent processing, they can result in very different outcomes from it, for example, one system may disregard an event as being reasonably likely while another may take steps to avoid or compensate for such an event.

An approach which overcomes these difficulties is to explicitly define models of agent behaviour including adverse actions, such as agent failing to observe other agents or not reacting in an appropriate manner to avoid a collision. Such an expert system may be constructed by manually defining the ways that these mistakes may take place. Some adverse events may be recreated by restricting observed information, such as producing an agent plan without the observation of other agents. In other embodiments, the actions could be defined in different ways such as the finite state machine operating on a given agent state or planned trajectory, for example by encoding excessive acceleration or delayed braking, either randomly or based on certain circumstances. Use of such an expert system has a number of advantages such as:
it allows incremental development with minimal overhead, and may allow quite good behaviour with a fairly small amount of developments;
it does not require collecting a massive dataset of randomly sampled driving experience;
the knowledge in the system can be expanded and improved incrementally, and can make use of specialised sources of information to build the knowledge base.

Nevertheless, a major challenge of producing an expert system to capture adverse agent behaviours is to be able to identify sufficient behaviours to cover the domain effectively, and to be able to validate the extent of coverage. An additional challenge is to be able to produce an implementation that covers a range of behaviours reliably enough, and to assign probability estimates that are accurate.

According some embodiments of the invention, a model is trained using specialised knowledge of adverse events in driving by using as training data datasets focused on such adverse events, such as datasets of accident reports such as may be found in an insurance company. This kind of data focuses on details of the long tail of driving experience (i.e. rare events) and is collected based on the very large amount of driving experience, for example a dataset maintained by a vehicle insurance company may effectively be collected from several millions of hours of driving experience, from the collective experience of the drivers that hold such insurance. Incorporating such datasets may require consideration of biases present in the data, but nevertheless such data sources can usefully be utilised to train a model and to validate how well a developed model covers the domain of adverse events.

There will now be described a possible implementation utilising the multi-agent models described herein.

For an autonomous vehicle to travel from its current location to a chosen destination, it must determine how to navigate the route, taking into account both the known fixed constraints of the road layout and the other vehicles on the road. This involves hierarchical decision making in which higher level decisions are incrementally broken down into increasingly fine grained decisions needed to implement the higher level decisions safely and effectively.

By way of example, the journey may be broken down into a series of goals, which are reached by performing sequences of manoeuvres, which in turn are achieved by implementing actions.

These terms are used in the context of the described embodiments of the technology as follows.

A goal is a high level aspect of planning such a position the vehicle is trying to reach from its current position or state. This may be for example a motorway exit, an exit on a roundabout, or a point in a lane at a set distance ahead of the vehicle. Goals may be determined based on the final destination of the vehicle, a route chosen for the vehicle , the environment in which the vehicle is in, etc.

A vehicle may reach a defined goal by performing a predefined manoeuvre or (more likely) a time sequence of such manoeuvres. Some examples of manoeuvres include a right hand turn, a left hand turn, stopping, a lane change, overtaking, and lane following (staying in the correct lane). The manoeuvres currently available to a vehicle which a vehicle can perform depend on its immediate environment. For example, at a T junction, a vehicle cannot continue straight but can turn left, turn right, or stop.

At any given time, a single current manoeuvre is selected and AV takes whatever actions are needed to perform that manoeuvre for as long as it is selected, e.g. when a lane following manoeuvre is selected, keeping the AV in a correct lane at a safe speed and distance from any vehicle in front; when an overtaking manoeuvre is selected, taking whatever preparatory actions are needed in anticipation of overtaking a vehicle in front and whatever actions are needed to overtake when it is safe to do so, etc. Given a selected current manoeuvre, a policy is implemented to inform the vehicle which actions should be taken to perform that manoeuvre. Actions are low level control operations which may include, for example, turning the steering 5 degrees clockwise or increasing pressure on the accelerator by 10%. The action to take may be determined by considering both the state of the vehicle itself, including current position and current speed, its environment, including the road layout and the behaviour of other vehicles or agents in the environment. The term "scenario" may be used to describe a particular environment in which a number of other vehicles/agent are exhibiting particular behaviours.

Policies for actions to perform a given manoeuvre in a given scenario may be learnt offline using reinforcement learning or other forms of ML training.

It will be appreciated that the examples given of goals, manoeuvres as actions are non-exhaustive and others may be defined to suit the situation the vehicle is in.

In certain embodiments, the model can help to explain the current situation being observed. For example the model may estimate that there are four most likely actions that a driver may do, and when it is observed what they actually do ,the model can help to explain it. For example , if it is observed that the AV takes a particular action the model will interpret that to mean the driver seems to be headed towards a right-turn because they are turning and slowing down.

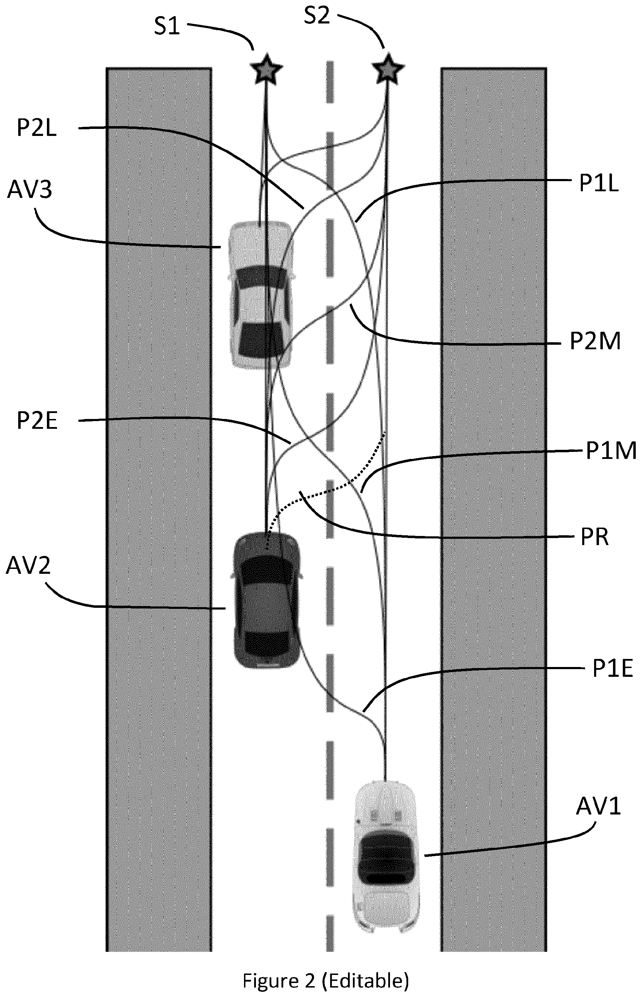

Figure 2 illustrates a change of lanes interactive scenario where stars S1, S2 represent respective goals. In Figure 2, several examples of paths of each agent heading towards each goal are illustrated. Multiple paths are shown for each agent/goal pair, in this case representing the earliest/latest path considered reasonable under a bicycle kinematic model, and one path in the middle. For example, consider the agent vehicle AV1. The earliest reasonable path is considered is labelled P1E and the latest reasonable path is labelled P1L. A middle path is labelled P1M. Similarly, for agent vehicle AV2, a set of paths for that vehicle are labelled P2e, P2m and P2ll. Correspondingly for agent vehicle AV3. Agent vehicle AV1 may be considered the ego vehicle for purposes of explanation. The ego vehicle AV1 has the task of planning its path based on the expectations of behaviour of the agent vehicle AV2. Using a rational goal based model, the ego vehicle AV1 would plan that the agent vehicle AV2 would perform a reasonable overtaking manoeuvre which may lie on any of the paths P2e ... P2l. The ego vehicle would plan accordingly, based on comfort and safety criteria as is known.

However, in a small number of cases, the agent vehicle AV2 may not operate rationally. For example, it may suddenly cut to the right and slow down, shown on the dotted line marked Pr.

Conversely, the agent vehicle AV2 may act rationally, but in poor perception conditions such that it does not see the forward vehicle AV3. In that case, the agent vehicle AV2 may not move into an overtaking manoeuvre at all, but instead potentially cause a dangerous collision. The ego vehicle AV1 has a task of planning with a certain contingency that this may be a possible outcome. That is, in the set of paths for which the ego vehicle may plan, there may be a set of rational paths and then a set of unusual paths which can be included with a probabilistic weighting.

## Claims

1. A method implemented by an ego agent ( EV ) in a scenario of predicting actions of one or more actor agent ( AV1 , AV2, AV3 ) in the scenario, the method comprising:
for each actor agent ( AV1, AV2, AV3 ) using a plurality of agent models ( AMa, AMb, AMc ) to generate a set of candidate futures, each candidate future providing an expected action of the actor agent;
applying a weighting function to each candidate future to indicate its relevance in the scenario; and
selecting for each actor agent a group of candidate futures based on the indicated relevance, wherein the plurality of agent models comprises a first model representing a rational goal directed behaviour inferable from the vehicular scene of the scenario, and at least one second model representing an alternate behaviour not inferable from the vehicular scene.

2. The method of claim 1 wherein the step of generating each candidate future is carried out by a prediction component ( 104 ) of the ego agent which provides each expected action at a prediction time step.

3. The method of claim 1 or 2 which comprises transmitting the candidate futures to a planner (106) of the ego agent.

4. The method of claim 1 or 2 wherein the candidate futures are generated by a joint planner/prediction exploration method.

5. The method of any preceding claim wherein the step of using the agent models to generate the candidate futures comprises supplying to each agent model a current state of all actor agents in the scenario.

6. The method of any preceding claim comprising supplying a history of one or more actor agents in the scenario to each agent model, prior to generating the candidate futures.

7. The method of any preceding claim comprising supplying sensor derived data of the current scenario to each agent model prior to generating the candidate futures.

8. The method of claim 2 or any of clams 3 to 7 when dependent thereon wherein the prediction time step is a predetermined time ahead of current time when the candidate futures are generated.

9. The method of any preceding claim wherein the step of generating the candidate futures comprises generating the candidate futures in a given time window.

10. The method of any preceding claim wherein the at least one second model is selected from one or more of the following agent model types:
an agent model type which represents a rational goal directed behaviour based on inadequate or incorrect information about the scenario;
an agent model type which represents unexpected actions of an actor agent ; and
an agent model type which models known or observed driver errors.

11. The method of any preceding claim wherein each candidate future is defined as one or more trajectory for the actor agent.

12. The method of any of claims 1 to 10 wherein each candidate future is defined as a raster probability density function.

13. The method of any preceding claim wherein the step of selecting candidate futures comprises using at least one of a probability score indicating the likelihood of events occurring and a significance factor indicating the significance to the ego agent of resulting outcomes.

14. A computer device ( 100 ) comprising one or more hardware processor and computer memory which stores computer executable instructions which, when executed by the one or more hardware processor implement the method of any preceding claim.

15. A computer program product comprising computer executable instructions stored on a computer memory, the computer executable instructions being executable by one or more hardware processor to implement the method of any of claims 1 to 13.

16. A computer device according to claim 14 configured to be embodied in an on-board computer system ( 100 ) of an autonomous vehicle, the autonomous vehicle comprising an on-board sensor system ( 108 ) for capturing data comprising information about the environment of the scenario and the state of the actor agents in the environment.

17. The computer device of claim 16 comprising a data processing component configured to implement at least one of localisation, object detecting and object tracking to provide a representation of the environment of the scenario.

## Patentansprüche

1. Verfahren, das von einem Ego-Agenten (EV) in einem Szenario zur Vorhersage von Handlungen eines oder mehrerer Akteur-Agenten (AV1, AV2, AV3) in diesem Szenario umgesetzt wird, das Verfahren umfassend:
für jeden Akteur-Agenten (AV1, AV2, AV3), Verwenden einer Vielzahl von Agentenmodellen (AMa, AMb, AMc) zur Erzeugung eines Satzes von Zukunftsszenarien, wobei jedes Zukunftsszenario eine erwartete Aktion des Akteur-Agenten bereitstellt;
Anwenden einer Gewichtungsfunktion auf jedes Zukunftsszenario, um deren Relevanz für das Szenario anzugeben; und
wobei für jeden Akteur-Agenten eine Gruppe von möglichen Zukunftsszenarien auf der Grundlage der angegebenen Relevanz ausgewählt wird, wobei die Vielzahl von Agentenmodellen ein erstes Modell umfasst, das ein rationales, zielgerichtetes Verhalten darstellt, das aus der Fahrzeugszene des Szenarios abgeleitet werden kann, sowie mindestens ein zweites Modell, das ein alternatives Verhalten darstellt, das nicht aus der Fahrzeugszene abgeleitet werden kann.

2. Verfahren nach Anspruch 1, wobei der Schritt der Erzeugung jedes Zukunftsszenarios von einer Vorhersagekomponente (104) des Ego-Agenten durchgeführt wird, die zu jedem Vorhersagezeitpunkt jede erwartete Aktion bereitstellt.

3. Verfahren nach Anspruch 1 oder 2, das das Übertragen des Zukunftsszenarios an einen Planer (106) des Ego-Agenten umfasst.

4. Verfahren nach Anspruch 1 oder 2, wobei die Zukunftsszenarien durch ein gemeinsames Planungs-/Vorhersage-Explorationsverfahren erzeugt werden.

5. Verfahren nach einem der vorstehenden Ansprüche, wobei der Schritt der Verwendung der Agentenmodelle zur Erzeugung der Zukunftsszenarien darin besteht, jedem Agentenmodell einen aktuellen Zustand aller Akteur-Agenten im Szenario zuzuführen.

6. Verfahren nach einem der vorstehenden Ansprüche, umfassend das Zuführen jedem Agentenmodell vor der Erzeugung der Zukunftsszenarien einer Historie eines oder mehrerer Akteur-Agenten im Szenario.

7. Verfahren nach einem der vorstehenden Ansprüche, umfassend das Zuführen jedem Agentenmodell vor der Erzeugung der Zukunftsszenarien sensorbasierter Daten der aktuellen Szenarien.

8. Verfahren nach Anspruch 2 oder einem der Ansprüche 3 bis 7, sofern es davon abhängt, wobei der Vorhersagezeitschritt bei der Erzeugung der Zukunftsszenarien eine vorbestimmte Zeitspanne vor der aktuellen Zeit liegt.

9. Verfahren nach einem der vorstehenden Ansprüche, wobei der Schritt des Erzeugens der Zukunftsszenarien das Erzeugen der Zukunftsszenarien innerhalb eines vorgegebenen Zeitfensters umfasst.

10. Verfahren nach einem der vorstehenden Ansprüche, wobei das mindestens eine zweite Modell aus einem oder mehreren der folgenden Agentenmodelltypen ausgewählt wird:
ein Agentenmodelltyp, der ein rationales, zielgerichtetes Verhalten auf der Grundlage unzureichender oder falscher Informationen über das Szenario abbildet;
ein Agentenmodelltyp, der unerwartete Aktionen eines Akteur-Agenten darstellt; und
ein Agentenmodelltyp, der bekannte oder beobachtete Fahrfehler abbildet.

11. Verfahren nach einem der vorstehenden Ansprüche, wobei jedes Zukunftsszenario als eine oder mehrere Bewegungsbahnen des Akteurs-Agenten definiert ist.

12. Verfahren nach einem der Ansprüche 1 bis 10, wobei jedes Zukunftsszenario als eine Raster-Wahrscheinlichkeitsdichtefunktion definiert ist.

13. Verfahren nach einem der vorstehenden Ansprüche, wobei der Schritt des Auswählens von möglichen Zukunftsszenarien die Verwendung mindestens eines der einer Wahrscheinlichkeitsbewertung, die die Wahrscheinlichkeit des Eintretens von Ereignissen angibt, und eines Signifikanzfaktors, der die Bedeutung der sich daraus ergebenden Ergebnisse für den Ego-Agenten angibt, umfasst.

14. Computervorrichtung (100), die einen oder mehrere Hardwareprozessoren und einen Computerspeicher umfasst, in dem computerausführbare Anweisungen gespeichert sind, die bei ihrer Ausführung durch den einen oder die mehreren Hardwareprozessoren das Verfahren eines der vorstehenden Ansprüche umsetzen.

15. Computerprogrammprodukt, das in einem Computerspeicher gespeicherte, von einem Computer ausführbare Anweisungen umfasst, wobei die von einem Computer ausführbaren Anweisungen von einem oder mehreren Hardwareprozessoren ausgeführt werden können, um das Verfahren nach einem der Ansprüche 1 bis 13 umzusetzen.

16. Computervorrichtung nach Anspruch 14, die konfiguriert ist, um in einem Bordcomputersystem (100) eines autonomen Fahrzeugs implementiert zu werden kann, wobei das autonome Fahrzeug ein Bordsensorsystem (108) umfasst, das Daten erfasst, die Informationen über die Umgebung des Szenarios und den Zustand der Akteur-Agenten in der Umgebung umfassen.

17. Computervorrichtung nach Anspruch 16, umfassend eine Datenverarbeitungskomponente, die konfiguriert ist, um mindestens eine Lokalisierung, Objekterkennung und Objektverfolgung auszuführen, um eine Darstellung der Umgebung des Szenarios bereitzustellen.

## Revendications

1. Procédé implémenté par un agent ego (EV) dans un scénario de prédiction d'actions d'un ou plusieurs agents acteurs (AV1, AV2, AV3) dans le scénario, le procédé comprenant :
pour chaque agent acteur (AV1, AV2, AV3), l'utilisation d'une pluralité de modèles d'agents (AMa, AMb, AMc) pour générer un ensemble d'avenirs candidats, chaque avenir candidat fournissant une action attendue de l'agent acteur ;
l'application d'une fonction de pondération à chaque avenir candidat pour indiquer sa pertinence dans le scénario ; et
la sélection pour chaque agent acteur d'un groupe d'avenirs candidats sur la base de la pertinence indiquée, dans lequel la pluralité de modèles d'agents comprend un premier modèle représentant un comportement rationnel orienté vers un objectif déductible de la scène véhiculaire du scénario, et au moins un second modèle représentant un comportement alternatif non déductible de la scène véhiculaire.

2. Procédé selon la revendication 1 dans lequel l'étape consistant à générer chaque avenir candidat est réalisée par un composant de prédiction (104) de l'agent ego qui fournit chaque action attendue à un pas de temps de prédiction.

3. Procédé selon la revendication 1 ou 2 qui comprend la transmission des avenirs candidats à un planificateur (106) de l'agent ego.

4. Procédé selon la revendication 1 ou 2 dans lequel les avenirs candidats sont générés par un procédé d'exploration de planification/prédiction conjoint.

5. Procédé selon l'une quelconque revendication précédente dans lequel l'étape consistant à utiliser les modèles d'agents pour générer les avenirs candidats comprend la fourniture à chaque modèle d'agent d'un état actuel de tous les agents acteurs dans le scénario.

6. Procédé selon l'une quelconque revendication précédente comprenant la fourniture d'un historique d'un ou plusieurs agents acteurs dans le scénario à chaque modèle d'agent, avant la génération des avenirs candidats.

7. Procédé selon l'une quelconque revendication précédente comprenant la fourniture de données dérivées de capteurs du scénario actuel à chaque modèle d'agent avant la génération des avenirs candidats.

8. Procédé selon la revendication 2 ou l'une quelconque des revendications 3 à 7 lorsqu'il dépend de celles-ci dans lequel le pas de temps de prédiction est un temps prédéterminé en avant du temps actuel au moment où les avenirs candidats sont générés.

9. Procédé selon l'une quelconque revendication précédente dans lequel l'étape consistant à générer les avenirs candidats comprend la génération des avenirs candidats dans une fenêtre temporelle donnée.

10. Procédé selon l'une quelconque revendication précédente dans lequel l'au moins un second modèle est sélectionné parmi un ou plusieurs des types de modèles d'agents suivants :
un type de modèle d'agent qui représente un comportement rationnel orienté vers un objectif sur la base d'informations insuffisantes ou incorrectes concernant le scénario ;
un type de modèle d'agent représentant les actions inattendues d'un agent acteur ; et
un type de modèle d'agent qui reproduit les erreurs de conduite connues ou observées.

11. Procédé selon l'une quelconque revendication précédente dans lequel chaque avenir candidat est défini comme une ou plusieurs trajectoires pour l'agent acteur.

12. Procédé selon l'une quelconque des revendications 1 à 10 dans lequel chaque avenir candidat est défini comme une fonction de densité de probabilité matricielle.

13. Procédé selon l'une quelconque revendication précédente dans lequel l'étape consistant à sélectionner des avenirs candidats comprend l'utilisation d'au moins l'un parmi un score de probabilité indiquant la probabilité d'événements se produisant et un facteur d'importance indiquant l'importance des résultats obtenus pour l'agent ego.

14. Dispositif informatique (100) comprenant un ou plusieurs processeurs matériels et une mémoire informatique qui stocke des instructions exécutables par ordinateur qui, lorsqu'elles sont exécutées par le ou les processeurs matériels implémentent le procédé selon l'une quelconque revendication précédente.

15. Produit de programme informatique comprenant des instructions exécutables par ordinateur stockées dans une mémoire informatique, les instructions exécutables par ordinateur pouvant être exécutées par un ou plusieurs processeurs matériels pour implémenter le procédé selon l'une quelconque des revendications 1 à 13.

16. Dispositif informatique selon la revendication 14 configuré pour être intégré dans un système informatique embarqué (100) d'un véhicule autonome, le véhicule autonome comprenant un système de capteurs embarqué (108) permettant de capturer des données comprenant des informations sur l'environnement du scénario et sur l'état des agents acteurs dans l'environnement.

17. Dispositif informatique selon la revendication 16 comprenant un composant de traitement de données configuré pour implémenter au moins l'une parmi la localisation, la détection d'objets et le suivi d'objets afin de fournir une représentation de l'environnement du scénario.
